(19) **Europäisches Patentamt / European Patent Office / Office européen des brevets**

(11) **EP 3 856 839 B1**

(12) **EUROPEAN PATENT SPECIFICATION**

(45) Date of publication and mention of the grant of the patent:
**14.06.2023 Bulletin 2023/24**

(21) Application number: **19778464.8**

(22) Date of filing: **23.09.2019**

(51) International Patent Classification (IPC):
**C08L 25/12** (2006.01)    **C08L 55/02** (2006.01)
**C08K 5/11** (2006.01)    **C08K 5/20** (2006.01)
**C08K 3/22** (2006.01)    **C08L 83/04** (2006.01)

(52) Cooperative Patent Classification (CPC):
(C-Sets available)
**C08L 25/12; C08L 55/02;** C08K 2003/2206;
C08K 2003/222; C08K 2003/2296    (Cont.)

(86) International application number:
**PCT/EP2019/075463**

(87) International publication number:
**WO 2020/064594 (02.04.2020 Gazette 2020/14)**

(54) **HEAT RESISTANT ABS COMPOSITION WITH REDUCED ODOR FOR AUTOMOTIVE INTERIOR APPLICATION**

WÄRMEBESTÄNDIGE ABS-ZUSAMMENSETZUNG MIT REDUZIERTEM GERUCH FÜR DIE AUTOMOBILINNENRAUMANWENDUNG

COMPOSITION À BASE DE MATÉRIAU ABS RÉSISTANTE À LA CHALEUR À ODEUR ATTÉNUÉE POUR APPLICATION SUR INTÉRIEUR D'AUTOMOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.09.2018 EP 18196428**

(43) Date of publication of application:
**04.08.2021 Bulletin 2021/31**

(73) Proprietor: **INEOS Styrolution Group GmbH 60325 Frankfurt (DE)**

(72) Inventors:
• NIESSNER, Norbert
  67159 Friedelsheim (DE)
• MICHELS, Gisbert
  51375 Leverkusen (DE)
• EISENTRÄGER, Frank
  50996 Köln (DE)
• MADHAV, Shridhar
  Vadodara 390002 (IN)
• GEVARIA, Kirit
  Vadodara 390008 (IN)
• BHAVSAR, Pratik
  Bil, Gujarat 391410 (IN)
• LEE, KwanHee
  Ulsan 44496 (KR)

(74) Representative: **Jacobi, Markus Alexander Patentanwälte Isenbruck Bösl Hörschler PartG mbB Eastsite One Seckenheimer Landstrasse 4 68163 Mannheim (DE)**

(56) References cited:
EP-A2- 0 849 317    WO-A1-2017/211783
WO-A1-2018/145970    US-A1- 2017 190 894

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 25/12, C08K 3/22, C08K 5/005, C08K 5/098,
C08K 5/20, C08L 55/02, C08L 83/04;
C08L 25/12, C08L 55/02, C08K 5/20, C08K 5/11,
C08K 3/22, C08L 83/04**

C-Sets
**C08L 25/12, C08L 55/02, C08K 5/20, C08K 5/11,
C08K 3/22, C08L 83/04**

**Description**

The invention is directed to heat resistant ABS thermoplastic molding compositions that exhibit a low odor along with good mechanical properties, a process for their preparation and its use, in particular for automotive interior applications.

In the automotive market, the application of ABS plastic materials is increasing year by year. Owing to the exceptional properties of ABS plastic materials, auto manufacturers mostly prefer it for both interior as well as exterior applications. ABS is chosen for variety of automotive application because it provides balanced characteristics of impact strength, dimensional stability, flowability, chemical resistance and heat resistance, which normally other general-purpose thermoplastics cannot deliver. ABS is also used in many interior auto-components and certain requirements like low volatile content or low odor are desirable. Moreover, the increasing legal and environmental regulations and stringent laws are pushing automobile manufacturers to opt for alternative ABS compositions having these additional value propositions. In general, the health awareness of end user of automobiles is also increasing and the low odor interiors for the vehicles are in much demand today.

The odor intensity measurements are generally assessed by specific internal standards of the Original Equipment Manufacturers (OEM). The odor is classified comfortable or uncomfortable by checking the intensity of smell by a selected panel of members. The rating is given for odor intensity as well as for comfortability that is also mentioned as Hedonic scale of odor. Odor intensity is fixed to be below 3 and comfortability to be more than -1.6 as passing criteria by most of the standards worldwide.

In the prior art for the preparation of low odor ABS compositions it is proposed to add some special chemicals containing epoxy groups (cp. EP 0849317 A2) or certain other odor removing or odor suppressing ingredients (cp. CN-A 103665733) like polycaprolactam (cp. CN-A 107236239) or molecular sieves (cp. CN-A 107629385, CN-A 1730543). Another method commonly adopted is the use of highly volatile deodorizing agents which suppress the basic ABS odor by a pleasant odor.

CN-A 107446336 discloses a PC/ABS material of low odor and spray free appearance. The odor is reduced by use of a deodorant (an extractive devolatilization product) and by use of a bulk ABS of high purity and low residual monomer content.

CN-A 103665733 discloses a low-odor ABS plastic which comprises various additives such as 6 pbw calciumstearate, 7 pbw cresyl phosphite, 10 pbw calcium carbonate, 15 pbw titanium dioxide, based on 100 pbw ABS resin. The ABS resin (not further specified) preferably comprises dioctyl phosphate (DOP). The use of DOP causes legal and environmental problems.

CN-A 1730543 describes a low odor ABS material, wherein a hydrophobic molecular sieve material (alkali metal aluminosilicate) is added as odor removing agent.

CN-A 107236239 deals with a low odor ABS resin composition, which comprises - as odor removing agent - an antistatic masterbatch comprising polycaprolactam, a polyether amide and a conductive carbon black, and further auxiliary agents such as an antioxidant, a stabilizer, a lubricant, a heat resistant agent, and a dispersing agent. As lubricant N,N'-ethylene bis stearamide (EBS) is used in amounts of 0.5/0.55/0.06 wt.-%.

CN-A 107629385 describes a low-odor antistatic ABS composite material for automobiles. In order to improve the odor level of the ABS material 3 components - an odor adsorbent (molecular sieve), an antistatic agent (stearic acid monoglyceride) and a small molecule deodorant (water) are added. The material further comprises a lubricant (EBS, 0.3 wt.-%).

EP 0849317 A2 discloses a thermoplastic ABS molding composition having improved odor containing as component I) a SAN-copolymer 1) as matrix polymer and at least one graft copolymer 2) obtained by emulsion polymerization of styrene and acrylonitrile (AN content 5 to 50 wt.-%, examples 14 wt.-%) in presence of a polybutadiene rubber, and as component II) a combination of ZnO and/or MgO and an epoxygroup containing compound of a fatty acid oil. In the examples ZnO or MgO are used in amounts of 0.5 or 0.6 pbw.

Due to the relatively high MgO content said ABS compositions often have reduced impact strength.

WO 2018/145970 A1 discloses an ABS polymer composition (P) with improved paintability, coatability and/or printability having a surface energy of > 38 dyne/cm. Exemplified ABS polymer compositions further comprise an additive (C-1), a mixture of a glycidyl epoxy alkoxy siloxane and a sebacic acid diester, or, an additive (C-2), an ethylene methyl acrylate copolymer.

Some manufacturers are modifying process, process steps or equipment designs in order to reduce the volatiles in the product, which are inherently transferred through raw materials or intermediates. However, this requires a major change in the process flow and is a difficult task.

As specified above, conventionally, deodorants, or epoxy containing compounds are used to enhance the comfortability of odor produced by ABS compositions. However, the addition of such compounds increases the costs of these compositions. These methods are covering up the basic odor to some extent by a pleasant odor of the additional ingredient. The root cause of the odor is not removed in most of these modifications. Adding some phthalate ingredient may reduce odor while increase the health and environmental hazards. Those who are using molecular sieves, generally silicate based ingredients, are not specific about the deviation in mechanical properties that are caused by addition of such ingredients to the resin compositions. In low odor applications of blends, inventors prefer for mass polymerized ABS, which is known to have lower VOC.

Thus, it is an object of the invention to provide an improved low-odor heat resistant ABS thermoplastic molding composition and a process for its preparation which does not have the afore-mentioned disadvantages and is suitable for automotive interior application.

One subject of the invention is a thermoplastic molding composition comprising (or consisting of) components A, B, C1, C2, C3, C4, C5 and D:

(A) 15 to 44.2 wt.-% of at least one graft copolymer (A) consisting of 15 to 60 wt.-% of a graft sheath (A2) and 40 to 85 wt.-% of a graft substrate - an agglomerated butadiene rubber latex - (A1), where (A1) and (A2) sum up to 100 wt.-%,

obtained by emulsion polymerization of styrene and acrylonitrile in a weight ratio of 95:5 to 65:35 to obtain a graft sheath (A2), it being possible for styrene and/or acrylonitrile to be replaced partially (less than 50 wt.-%) by alpha-methylstyrene, methyl methacrylate or maleic anhydride or mixtures thereof,
in the presence of at least one agglomerated butadiene rubber latex (A1) with a median weight particle diameter $D_{50}$ of 150 to 800 nm,
where the agglomerated rubber latex (A1) is obtained by agglomeration of at least one starting butadiene rubber latex (S-A1) having a median weight particle diameter $D_{50}$ of equal to or less than 120 nm, preferably equal to or less than 110 nm;

(B) 55 to 84.2 wt.-% of at least one copolymer (B) of styrene and acrylonitrile or alpha-methylstyrene and acrylonitrile, preferably styrene and acrylonitrile, in a weight ratio of from 95:5 to 50:50, preferably 78:22 to 55:45, more preferably 75:25 to 65:35, it being possible for styrene, alpha-methylstyrene and/or acrylonitrile to be partially (less than 50 wt.-%) replaced by methyl methacrylate, maleic anhydride and/or 4-phenylstyrene;
wherein copolymer (B) has a weight average molar mass $M_w$ of 95,000 to 250,000 g/mol, preferably 100,000 to 225,000 g/mol, more preferably 110,000 to 190,000 g/mol, most preferred 120,000 to 190,000 g/mol;

(C1) 0.65 to 1.20 wt.-% of at least one fatty acid amide or fatty acid amide derivative (C1), preferably stearic acid amide or stearic acid amide derivative, in particular ethylene bis-stearamide;

(C2) 0 to 0.40 wt.-% of at least one fatty acid metal salt (C2), preferably Ca, Mg or Zn stearate, more preferably Mg stearate;

(C3) 0.05 to 0.30 wt.-% of at least one metal oxide (C3) selected from MgO, CaO or ZnO, in particular MgO;

(C4) 0.05 to 0.80 wt.-% of at least one antioxidant (C4);

(C5) 0.05 to 0.30 wt.-% silicon oil (C5) having a kinematic viscosity in the range of from 25000 to 80000 centi Stokes, preferably 30000 to 60000 centi Stokes; and

(D) 0 to 5 wt.-% of at least one further additive/processing aid (D) different from (C1) to (C5), in particular UV absorbing additives, dyes and/or pigments;

where components A, B, C1, C3, C4, C5 and, if present, C2 and/or D, sum to 100 wt.-%.

A further subject of the invention is a thermoplastic molding composition comprising (or consisting of) components A, B, E1, E2, E3, E4 and F:

(A) 15 to 44.1 wt.-% of at least one graft copolymer (A) consisting of 15 to 60 wt.-% of a graft sheath (A2) and 40 to 85 wt.-% of a graft substrate - an agglomerated butadiene rubber latex - (A1), where (A1) and (A2) sum up to 100 wt.-%,

obtained by emulsion polymerization of styrene and acrylonitrile in a weight ratio of 95:5 to 65:35 to obtain a graft sheath (A2), it being possible for styrene and/or acrylonitrile to be replaced partially (less than 50 wt.-%) by alpha-methylstyrene, methyl methacrylate or maleic anhydride or mixtures thereof,
in the presence of at least one agglomerated butadiene rubber latex (A1) with a median weight particle diameter

$D_{50}$ of 150 to 800 nm,

where the agglomerated rubber latex (A1) is obtained by agglomeration of at least one starting butadiene rubber latex (S-A1) having a median weight particle diameter $D_{50}$ of equal to or less than 120 nm, preferably equal to or less than 110 nm;

(B) 55 to 84.1 wt.-% of at least one copolymer (B) of styrene and acrylonitrile or alpha-methylstyrene and acrylonitrile, preferably styrene and acrylonitrile, in a weight ratio of from 95:5 to 50:50, preferably 78:22 to 55:45, more preferably 75:25 to 65:35, it being possible for styrene, alpha-methylstyrene and/or acrylonitrile to be partially (less than 50 wt.-%) replaced by methyl methacrylate, maleic anhydride and/or 4-phenylstyrene;

wherein copolymer (B) has a weight average molar mass $M_w$ of 95,000 to 250,000 g/mol, preferably 100,000 to 225,000 g/mol, more preferably 110,000 to 190,000 g/mol, most preferred 120,000 to 190,000 g/mol;

(E1) 0.05 to 0.30 wt.-% of at least one metal oxide (E1) selected from MgO, CaO or ZnO, in particular MgO;

(E2) 0.05 to 0.80 wt.-% of at least one antioxidant (E2);

(E3) 0.05 to 0.30 wt.-% silicon oil (E3) having a kinematic viscosity in the range of from 30000 to 80000 centi Stokes;

(E4) 0.65 to 1.20 wt.-% of at least one fatty acid ester (E4), preferably a stearic acid ester, in particular pentaerythritol tetrastearate (PETS);

(F) 0 to 5 wt.-% of at least one further additive/processing aid (F) different from (E1) to (E4), in particular UV light absorbing additives, dyes and/or pigments, provided that fatty acid metal salts, in particular Ca, Mg or Zn stearates, are excluded;

where components A, B, E1, E2, E3, E4 and, if present, F, sum to 100 wt.-%.

If optional components (C2), (D) or (F) are present, their minimum amount is 0.01 wt.-%, based on the entire thermoplastic molding composition.

Wt.-% means percent by weight.

The term "diene" means a conjugated diene; "butadiene" means 1,3-butadiene.

The median weight particle diameter $D_{50}$, also known as the $D_{50}$ value of the integral mass distribution, is defined as the value at which 50 wt.-% of the particles have a diameter smaller than the $D_{50}$ value and 50 wt.-% of the particles have a diameter larger than the $D_{50}$ value. In the present application the weight-average particle diameter $D_w$, in particular the median weight particle diameter $D_{50}$, is determined with a disc centrifuge (e.g.: CPS Instruments Inc. DC 24000 with a disc rotational speed of 24000 rpm).

The weight-average particle diameter $D_w$ is defined by the following formula (see G. Lagaly, O. Schulz and R. Ziemehl, Dispersionen und Emulsionen: Eine Einführung in die Kolloidik feinverteilter Stoffe einschließlich der Tonminerale, Darmstadt: Steinkopf-Verlag 1997, ISBN 3-7985 -1087-3, page 282, formula 8.3b):

$$D_w = \text{sum} \left( n_i * d_i^4 \right) / \text{sum}\left( n_i * d_i^3 \right)$$

$n_i$: number of particles of diameter $d_i$.

The summation is performed from the smallest to largest diameter of the particles size distribution. It should be mentioned that for a particles size distribution of particles with the same density which is the case for the starting rubber latices and agglomerated rubber latices the volume average particle size diameter Dv is equal to the weight average particle size diameter Dw.

The weight average molar mass $M_w$ is determined by GPC (solvent: tetrahydrofuran, polystyrene as polymer standard) with UV detection according to DIN 55672-1:2016-03.

For the measurement of the kinematic viscosity a standard test method according to ASTM D445-06 is used.

Preferably the thermoplastic molding composition of the invention comprises (or consists of):

18 to 33.97 wt.-% component (A);
65 to 80.97 wt.-% component (B);
0.70 to 1.15 wt.-% component (C1);
0 to 0.35 wt.-% component (C2);
0.08 to 0.20 wt.-% component (C3);
0.15 to 0.70 wt.-% component (C4);

0.10 to 0.25 wt.-% component (C5);
0 to 3 wt.-% component (D).

More preferably the thermoplastic molding composition of the invention comprises (or consists of):

21 to 28.2 wt.-% component (A);
70 to 77.2 wt.-% component (B);
0.90 to 1.10 wt.-% component (C1);
0 to 0.30 wt.-% component (C2);
0.08 to 1.50 wt.-% component (C3);
0.20 to 0.60 wt.-% component (C4);
0.12 to 0.20 wt.-% component (C5);
0.50 to 3 wt.-% component (D).

Furthermore preferably the thermoplastic molding composition of the invention comprises (or consists of):

17 to 29.9 wt.-% component (A);
69 to 81.9 wt.-% component (B);
0.15 to 0.35 wt.-% component (E1);
0.15 to 0.70 wt.-% component (E2);
0.10 to 0.25 wt.-% component (E3);
0.70 to 1.20 wt.-% component (E4);
0 to 3 wt.-% component (F).

Furthermore more preferably the thermoplastic molding composition of the invention comprises (or consists of):

18 to 23.6 wt.-% component (A);
75 to 80.6 wt.-% component (B);
0.18 to 0.32 wt.-% component (E1);
0.20 to 0.60 wt.-% component (E2);
0.12 to 0.20 wt.-% component (E3);
0.90 to 1.10 wt.-% component (E4);
0 to 3 wt.-% component (F).

Component (A)

Graft copolymer (A) (component (A)) is known and described e.g. in WO 2012/022710, WO 2014/170406 and WO 2014/170407.

Graft copolymer (A) consists of 15 to 60 wt.-% of a graft sheath (A2) and 40 to 85 wt.-% of a graft substrate - an agglomerated butadiene rubber latex - (A1), where (A1) and (A2) sum up to 100 wt.-%.

Preferably graft copolymer (A) is obtained by emulsion polymerization of styrene and acrylonitrile in a weight ratio of 80:20 to 65:35, preferably 74:26 to 70:30, to obtain a graft sheath (A2), it being possible for styrene and/or acrylonitrile to be replaced partially (less than 50 wt.-%, preferably less than 20 wt.-%, more preferably less than 10 wt.-%, based on the total amount of monomers used for the preparation of (A2)) by alpha-methylstyrene, methyl methacrylate or maleic anhydride or mixtures thereof, in the presence of at least one agglomerated butadiene rubber latex (A1) with a median weight particle diameter $D_{50}$ of 150 to 800 nm, preferably 180 to 700 nm, more preferably 200 to 600 nm, most preferred 250 to 500 nm, in particular preferred 300 to 400 nm.

Preferably at least one, preferably one, graft copolymer (A) consists of 20 to 50 wt.-% of a graft sheath (A2) and 50 to 80 wt.-% of a graft substrate (A1).

More preferably graft copolymer (A) consists of 30 to 45 wt.-% of a graft sheath (A2) and 55 to 70 wt.-% of a graft substrate (A1).

Most preferably graft copolymer (A) consists of 35 to 45 wt.-% of a graft sheath (A2) and 55 to 65 wt.-% of a graft substrate (A1).

Preferably the obtained graft copolymer (A) has a core-shell-structure; the graft substrate (A1) forms the core and the graft sheath (A2) forms the shell.

Preferably for the preparation of the graft sheath (A2) styrene and acrylonitrile are not partially replaced by one of the above-mentioned comonomers; preferably styrene and acrylonitrile are polymerized alone in a weight ratio of 95:5 to 65:35, preferably 80:20 to 65:35, more preferably 74:26 to 70:30.

The agglomerated rubber latex (A1) may be obtained by agglomeration of at least one starting butadiene rubber latex (S-A1) having a median weight particle diameter $D_{50}$ of equal to or less than 120 nm, preferably equal to or less than 110 nm, with at least one acid anhydride, preferably acetic anhydride or mixtures of acetic anhydride with acetic acid, in particular acetic anhydride, or alternatively, by agglomeration with a dispersion of an acrylate copolymer.

The at least one, preferably one, starting butadiene rubber latex (S-A1) preferably has a median weight particle diameter $D_{50}$ of equal to or less than 110 nm, particularly equal to or less than 87 nm.

The term "butadiene rubber latex" means polybutadiene latices produced by emulsion polymerization of butadiene and less than 50 wt.-% (based on the total amount of monomers used for the production of polybutadiene polymers) of one or more monomers that are copolymerizable with butadiene as comonomers.

Examples for such monomers include isoprene, chloroprene, acrylonitrile, styrene, alpha-methylstyrene, $C_1$-$C_4$-alkylstyrenes, $C_1$-$C_8$-alkylacrylates, $C_1$-$C_8$-alkylmethacrylates, alkyleneglycol diacrylates, alkylenglycol dimethacrylates, divinylbenzol; preferably, butadiene is used alone or mixed with up to 30 wt.-%, preferably up to 20 wt.-%, more preferably up to 15 wt.-% styrene and/or acrylonitrile, preferably styrene.

Preferably the starting butadiene rubber latex (S-A1) consists of 70 to 99 wt.-% of butadiene and 1 to 30 wt.-% styrene.

More preferably the starting butadiene rubber latex (S-A1) consists of 85 to 99 wt.-% of butadiene and 1 to 15 wt.-% styrene.

Most preferably the starting butadiene rubber latex (S-A1) consists of 85 to 95 wt.-% of butadiene and 5 to 15 wt.-% styrene.

The agglomerated rubber latex (graft substrate) (A1) may be obtained by agglomeration of the above-mentioned starting butadiene rubber latex (S-A1) with at least one acid anhydride, preferably acetic anhydride or mixtures of acetic anhydride with acetic acid, in particular acetic anhydride.

The preparation of graft copolymer (A) by emulsion polymerization is described in detail in WO 2012/022710. Preferably for the emulsion polymerization process a plant based, in particular a rosin acid-based emulsifier, is used.

Graft copolymer (A) can be prepared by a process comprising the steps: α) synthesis of starting butadiene rubber latex (S-A1) by emulsion polymerization, β) agglomeration of latex (S-A1) to obtain the agglomerated butadiene rubber latex (A1) and γ) grafting of the agglomerated butadiene rubber latex (A1) to form a graft copolymer (A).

The synthesis (step α)) of starting butadiene rubber latices (S-A1) is described in detail on pages 5 to 8 of WO 2012/022710 A1. Preferably the starting butadiene rubber latices (S-A1) are produced by an emulsion polymerization process using metal salts, in particular persulfates (e.g. potassium persulfate), as an initiator and a rosin-acid based emulsifier.

As rosin acid-based emulsifiers, those are being used in particular for the production of the starting rubber latices by emulsion polymerization that contain alkaline salts of the rosin acids. Salts of the rosin acids are also known as rosin soaps. Examples include alkaline soaps as sodium or potassium salts from disproportionated and/or dehydrated and/or hydrated and/or partially hydrated gum rosin with a content of dehydroabietic acid of at least 30 wt.-% and preferably a content of abietic acid of maximally 1 wt.-%. Furthermore, alkaline soaps as sodium or potassium salts of tall resins or tall oils can be used with a content of dehydroabietic acid of preferably at least 30 wt.-%, a content of abietic acid of preferably maximally 1 wt.-% and a fatty acid content of preferably less than 1 wt.-%.

Mixtures of the aforementioned emulsifiers can also be used for the production of the starting rubber latices. The use of alkaline soaps as sodium or potassium salts from disproportionated and/or dehydrated and/or hydrated and/or partially hydrated gum rosin with a content of dehydroabietic acid of at least 30 wt.-% and a content of abietic acid of maximally 1 wt.-% is advantageous.

Preferably the emulsifier is added in such a concentration that the final particle size of the starting butadiene rubber latex (S-A1) achieved is from 60 to 110 nm (median weight particle diameter $D_{50}$).

Polymerization temperature in the preparation of the starting rubber latices (S-A1) is generally 25°C to 160°C, preferably 40°C to 90°C. Further details to the addition of the monomers, the emulsifier and the initiator are described in WO 2012/022710. Molecular weight regulators, salts, acids and bases can be used as described in WO 2012/022710.

Then the obtained starting butadiene rubber latex (S-A1) is subjected to agglomeration (step β)) to obtain agglomerated rubber latex (A1).

The agglomeration with at least one acid anhydride is described in detail on pages 8 to 12 of WO 2012/022710.

Preferably acetic anhydride, more preferably in admixture with water, is used for the agglomeration. Preferably the agglomeration step β) is carried out by the addition of 0.1 to 5 parts by weight of acetic anhydride per 100 parts of the starting rubber latex solids.

The agglomerated rubber latex (A1) is preferably stabilized by addition of further emulsifier while adjusting the pH value of the latex (A1) to a pH value (at 20°C) between pH 7.5 and pH 11, preferably of at least 8, particular preferably of at least 8.5, in order to minimize the formation of coagulum and to increase the formation of a stable agglomerated rubber latex (A1) with a uniform particle size. As further emulsifier preferably rosin-acid based emulsifiers as described above in step α) are used. The pH value is adjusted by use of bases such as sodium hydroxide solution or preferably potassium hydroxide solution.

The obtained agglomerated rubber latex (A1) has a median weight particle diameter $D_{50}$ of generally 150 to 800 nm, preferably 180 to 700 nm, more preferably 200 to 600 nm, most preferred 250 to 500 nm, in particular preferred 300 to 400 nm. The agglomerated latex rubber latex (A1) obtained according to this method is preferably mono-modal.

Alternatively the agglomeration can be done by adding a dispersion of an acrylate polymer.

Preference is given to the use of dispersions of copolymers of $C_1$ to $C_4$-alkyl acrylates, preferably of ethyl acrylate, with from 0.1 to 10% by weight of monomers which form polar polymers, examples being acrylic acid, methacrylic acid, acrylamide, methacrylamide, N-methylol methacrylamide and N-vinylpyrrolidone. Particular preference is given to a copolymer of 92 to 98 wt.-% of ethyl acrylate and 2 to 8 wt.-% of methacrylamide. The agglomerating dispersion may, if desired, also contain more than one of the acrylate polymers mentioned.

In general, the concentration of the acrylate polymers in the dispersion used for agglomeration should be from 3 to 40% by weight. For the agglomeration, from 0.2 to 20 parts by weight, preferably from 1 to 5 parts by weight, of the agglomerating dispersion are used for each 100 parts of the rubber latex, the calculation in each case being based on solids. The agglomeration is carried out by adding the agglomerating dispersion to the rubber. The addition rate is usually not critical, and the addition usually takes from 1 to 30 minutes at from 20 to 90°C, preferably from 30 to 75°C.

Acrylate copolymers having a polydispersity U of less than 0.27 and a $d_{50}$ value of from 100 to 150 nm are preferably used for the agglomeration. Such acrylate copolymers are described in detail on pages 8 to 14 of WO 2014/170406.

In case of agglomeration with a dispersion of an acrylate copolymer generally the obtained graft substrate (A1) has a bimodal particle size distribution of nonagglomerated particles having a $d_{50}$ value in the range of from 80 to 120 nm and of agglomerated particles having a $d_{50}$ value in the range of 150 to 800 nm, preferably 180 to 700 nm, more preferably 200 to 600 nm, most preferred 250 to 500 nm.

In step γ) the agglomerated rubber latex (A1) is grafted to form the graft copolymer (A). Suitable grafting processes are described in detail on pages 12 to 14 of WO 2012/022710.

Graft copolymer (A) is obtained by emulsion polymerization of styrene and acrylonitrile - optionally partially replaced by alpha-methylstyrene, methyl methacrylate and/or maleic anhydride - in a weight ratio of 95:5 to 65:35 to obtain a graft sheath (A2) (in particular a graft shell) in the presence of the above-mentioned agglomerated butadiene rubber latex (A1).

Preferably graft copolymer (A) has a core-shell-structure.

The grafting process of the agglomerated rubber latex (A1) of each particle size is preferably carried out individually.

Preferably the graft polymerization is carried out by use of a redox catalyst system, e.g. with cumene hydroperoxide or tert.-butyl hydroperoxide as preferable hydroperoxides. For the other components of the redox catalyst system, any reducing agent and metal component known from literature can be used.

According to a preferred grafting process which is carried out in presence of at least one agglomerated butadiene rubber latex (A1) with a median weight particle diameter $D_{50}$ of preferably 280 to 350 nm, more preferably 300 to 330 nm, in an initial slug phase 15 to 40 wt.-%, more preferably 26 to 30 wt.-%, of the total monomers to be used for the graft sheath (A2) are added and polymerized, and this is followed by a controlled addition and polymerization of the remaining amount of monomers used for the graft sheath (A2) till they are consumed in the reaction to increase the graft ratio and improve the conversion. This leads to a low volatile monomer content of graft copolymer (A) with better impact transfer capacity.

Further details to polymerization conditions, emulsifiers, initiators, molecular weight regulators used in grafting step γ) are described in WO 2012/022710.

Component (B)

Component (B) is a copolymer of styrene and acrylonitrile or alpha-methylstyrene and acrylonitrile, preferably styrene and acrylonitrile, in a weight ratio of from 95:5 to 50:50, preferably 78:22 to 55:45, more preferably 75:25 to 65:35, it being possible for styrene, alpha-methylstyrene and/or acrylonitrile to be partially (less than 50 wt.-%) replaced by methyl methacrylate, maleic anhydride and/or 4-phenylstyrene. Copolymer (B) generally has a weight average molar mass $M_w$ of 95,000 to 250,000 g/mol, preferably 100,000 to 225,000 g/mol, more preferably 110,000 to 190,000 g/mol, most preferred 120,000 to 190,000 g/mol;

Preferably copolymer (B) (= component (B)) is a copolymer of styrene and acrylonitrile in a weight ratio of from preferably 78:22 to 65:35, more preferably 75:25 to 68:32, most preferred 72:28 to 70:30, it being possible for styrene and/or acrylonitrile to be partially (less than 50 wt.-%, preferably less than 20 wt.-%, more preferably less than 10 wt.-%, based on the total amount of monomers used for the preparation of (B)) replaced by methyl methacrylate, maleic anhydride and/or 4-phenylstyrene.

It is preferred that styrene and acrylonitrile are not partially replaced by one of the above-mentioned comonomers. Component (B) is preferably a copolymer of styrene and acrylonitrile.

According to one preferred embodiment copolymer (B) is a copolymer (B-1) having a weight average molar mass $M_w$ of 110,000 to 150,000 g/mol, more preferred 115,000 to 140,000, most preferred 120,000 to 140,000 g/mol. Copolymer (B-1) often has a melt flow index (MFI) of 25 to 35 g/10 min (measured according to ASTM D 1238 (ISO 1133:1-2011) at 220°C and 10 kg load). Preferably copolymer (B-1) is a copolymer of styrene and acrylonitrile in a weight ratio of from 78:22 to 65:35, preferably 75:25 to 68:32, more preferred 72:28 to 70:30.

Copolymer (B-1) is preferably used for thermoplastic molding composition comprising (consisting of) components A, B (= B-1), C1, C2, C3, C4, C5 and D.

According to one further preferred embodiment copolymer (B) is a copolymer (B-2) having a weight average molar mass $M_w$ of 150,000 to 225,000 g/mol, more preferably 160,000 to 200,000 g/mol, most preferred 170,000 to 190,000 g/mol. Copolymer (B-2) often has a melt flow index (MFI) of 6 to 10 g/10 min (measured according to ASTM D 1238 (ISO 1133:1-2011) at 220°C and 10 kg load. Preferably copolymer (B-2) is a copolymer of styrene and acrylonitrile in a weight ratio of from 78:22 to 65:35, preferably 75:25 to 68:32, more preferred 72:28 to 70:30.

Copolymer (B-2) is preferably used for thermoplastic molding composition comprising (consisting of) components A, B (= B-2), E1, E2, E3, E4 and F.

Details relating to the preparation of copolymers (B) are described, for example, in DE-A 2 420 358, DE-A 2 724 360 and in Kunststoff-Handbuch ([Plastics Handbook], Vieweg-Daumiller, volume V, (Polystyrol [Polystyrene]), Carl-Hanser-Verlag, Munich, 1969, pp. 122 ff., lines 12 ff.). Such copolymers prepared by mass (bulk) or solution polymerization in, for example, toluene or ethylbenzene, have proved to be particularly suitable.

Components C1 to C5

Component (C1) generally is a fatty acid amide or fatty acid amide derivative (C1), preferably stearic acid amide or stearic acid amide derivative, preferably ethylene bis-stearamide (EBS). Suitable fatty acid amides or amide derivatives are based on saturated fatty acids having 14 to 22, preferably 16 to 20, carbon atoms.

Component (C2) generally is a fatty acid metal salt. Suitable fatty acid metal salts are metal salts of saturated fatty acids having 14 to 22, preferably 16 to 20, carbon atoms. Preferred fatty acid metal salts are calcium, magnesium or zinc salts of stearic or behenic acid, more preferred calcium, magnesium or zinc salts of stearic acid, most preferably magnesium stearate.

Component (C3) generally is a metal oxide selected from Mg, Ca or Zn oxide, in particular MgO.

Component (C4) generally is at least one antioxidant.

Examples of suitable antioxidants include sterically hindered monocyclic or polycyclic phenolic antioxidants which may comprise various substitutions and may also be bridged by substituents. These include not only monomeric but also oligomeric compounds, which may be constructed of a plurality of phenolic units.

Hydroquinones and hydroquinone analogs are also suitable, as are substituted compounds, and also antioxidants based on tocopherols and derivatives thereof.

Further suitable antioxidants are based on trialkylphosphites such as O,O'-dioctadecylpentaerythritol bis(phosphite) (= distearylpentaerythrityldiphosphite (SPEP)).

It is also possible to use mixtures of different antioxidants. It is possible in principle to use any compounds which are customary in the trade or suitable for styrene copolymers, for example antioxidants from the Irganox® range. In addition to the phenolic antioxidants cited above by way of example, it is also possible to use so-called costabilizers, in particular phosphorus- or sulfur-containing costabilizers. These phosphorus- or sulfur-containing costabilizers are known to those skilled in the art.

Preferably the at least one antioxidant (C4) is Distearylpentaerythritoldiphosphite or a combination of Irgaphos® 168 and Irganox 1076.

As component (C5) generally silicon oils (polysiloxanes) having a kinematic viscosity in the range of from 25000 to 80000 centi Stokes (cst), preferably 30000 to 75000 centi Stokes, more preferably 45000 to 70000 centi Stokes, most preferred 55000 to 65000 centi Stokes, are used.

Component (D)

As component (D) at least one further additive/processing aid different from (C1) to (C5) can be used.

Component (D) is in particular at least one UV absorbing additive, dye and/or pigment.

Examples include, for example, dyes, pigments, colorants, antistats, stabilizers for improving thermal stability, stabilizers for increasing photostability (e.g. UV absorbing additives), stabilizers for enhancing hydrolysis resistance and chemical resistance and anti-thermal decomposition agents. These further added substances may be admixed at any stage of the manufacturing operation, but preferably at an early stage in order to profit early on from the stabilizing effects (or other specific effects) of the added substance.

For further additives/processing aids, see, for example, "Plastics Additives Handbook", Ed. Gächter and Müller, 5th edition, Hanser Publ., Munich, 2001.

Examples of suitable pigments include titanium dioxide, phthalocyanines, ultramarine blue, iron oxides or carbon black, and also the entire class of organic pigments. Preferably inorganic pigments such as titanium dioxide or carbon black are used.

Examples of suitable colorants include all dyes that may be used for the transparent, semi-transparent, or non-transparent coloring of polymers, in particular those suitable for coloring styrene copolymers.

The total amount of said colorants/pigments is preferably 0.6 to 1.8 wt.-%.

Examples of suitable UV absorbing additives are sterically hindered amines (hindered amine light stabilizers (HALS)) such as Uvinul® 4050, and also cyanoacrylates such as Uvinul® 3035. Often both types of compounds are used in combination.

The total amount of said UV absorbing additives is preferably 0.5 to 1.1 wt.-%.

Components E1 to E4

Component (E1) is defined as component (C3) above.

Component (E2) is defined as component (C4) above.

As component (E3) generally silicon oils (polysiloxanes) having a kinematic viscosity in the range of from 30000 to 80000 centi Stokes (cst), preferably 45000 to 70000 centi Stokes, more preferably 55000 to 65000 centi Stokes, most preferred 58000 to 62000 centi Stokes, are used.

Component (E4) generally is at least one fatty acid ester (E4), preferably a stearic acid or behenic acid ester, in particular pentaerythritol tetrastearate (PETS).

Suitable fatty acid esters are based on saturated fatty acids having 14 to 22, preferably 16 to 20, carbon atoms.

The fatty acid esters are generally fatty acid esters of C3 to C6 alcohols, in particular fatty acid esters of polyhydric C3 to C6 alcohols such as trimethylol propane and/or pentaerythritol, preferably stearic acid esters of C3 to C6 alcohols, more preferably stearic acid esters of polyhydric C3 to C6 alcohols, in particular stearic acid esters of trimethylolpropane and/or pentaerythritol.

Component (F)

As component (F) at least one further additive/processing aid (F) different from (E1) to (E4) can be used, provided that metal stearates such as Mg/Ca/Zn stearates are excluded.

Component (F) is in particular at least one UV absorbing additive, dye and/or pigment.

The further additives/processing aids (F) are as described and exemplified for component (D) above,

Preparation of Thermoplastic Molding Composition

The thermoplastic molding compositions may be produced from the components A, B, C1, C3, C4 and C5 and, if present C2 and/or D, or from the components A, B, E1, E2, E3 and E4 and, if present F, by any known method. However, it is preferable when the components are premixed and blended by melt mixing, for example conjoint extrusion, preferably with a twin-screw extruder, kneading or rolling of the components. This is done at temperatures in the range of from 160°C to 320°C, preferably from 180°C to 280°C, more preferably 220°C to 250°C. In a preferred embodiment, the component (A) is first partially or completely isolated from the aqueous dispersion obtained in the respective production steps. For example, the graft copolymers (A) may be mixed as a moist or dry crumb/powder (for example having a residual moisture of from 1 to 40%, in particular 20 to 40%) with the other components, complete drying of the graft copolymers (A) then taking place during the mixing. The drying of the particles may also be performed as per DE-A 19907136.

According to a preferred embodiment the thermoplastic molding composition of the invention comprises (or consists of):

18 to 33.97 wt.-% component (A);
65 to 80.97 wt.-% component (B);
0.70 to 1.15 wt.-% component (C1);
0 to 0.35 wt.-% component (C2);
0.08 to 0.20 wt.-% component (C3);
0.15 to 0.70 wt.-% component (C4);
0.10 to 0.25 wt.-%, preferably 0.12 to 0.20 wt.-%, component (C5);
0 to 3 wt.-% component (D),

wherein (C1) is EBS, (C2) is Mg, Ca or Zn stearate, preferably Mg stearate, (C3) is MgO and (C5) is a silicon oil having a kinematic viscosity of 55000 to 65000 cst.

More preferred are thermoplastic molding compositions according to the embodiment as hereinbefore described wherein graft copolymer (A) is obtained by emulsion polymerization by use of rosin based emulsifier.

Furthermore preferred are thermoplastic molding compositions according to the embodiment as hereinbefore described wherein copolymer (B) is a copolymer (B-1), preferably a copolymer of styrene and acrylonitrile in a weight ratio of from 78:22 to 65:35, preferably 75:25 to 68:32, having a weight average molar mass $M_w$ of 110,000 to 150,000 g/mol, most preferred 115,000 to 140,000 g/mol.

According to a further preferred embodiment the thermoplastic molding composition of the invention comprises (or consists of):

17 to 29.9 wt.-% component (A);
69 to 81.9 wt.-% component (B);
0.15 to 0.35 wt.-% component (E1);
0.15 to 0.70 wt.-% component (E2);
0.10 to 0.25 wt.-% component (E3);
0.70 to 1.20 wt.-% component (E4);
0 to 3 wt.-% component (F);
wherein (E1) is MgO, (E3) is a silicon oil having a kinematic viscosity of 55000 to 65000 cst and (E4) is PETS.

More preferred are thermoplastic molding compositions according to the embodiment as hereinbefore described wherein graft copolymer (A) is obtained by emulsion polymerization by use of rosin based emulsifier.

Furthermore preferred are thermoplastic molding compositions according to the embodiment as hereinbefore described wherein copolymer (B) is a copolymer (B-2), preferably a copolymer of styrene and acrylonitrile in a weight ratio of from 78:22 to 65:35, preferably 75:25 to 68:32, having a weight average molar mass $M_w$ of 150,000 to 225,000 g/mol, preferably 160,000 to 200,000 g/mol.

The thermoplastic molding compositions according to the invention have low odor and an excellent heat resistance along with good mechanical properties.

The invention further provides for the use of the inventive thermoplastic molding composition for the production of shaped articles.

Processing may be carried out using the known processes for thermoplast processing, in particular production may be effected by thermoforming, extruding, injection molding, calendaring, blow molding, compression molding, press sintering, deep drawing or sintering; injection molding is preferred.

Preferred is the use of the thermoplastic molding composition according to the invention for applications in the automotive sector, in particular for interior applications.

The invention is further illustrated by the examples and the claims.

Examples

Test Methods

Particle Size Dw/ $D_{50}$

For measuring the weight average particle size Dw (in particular the median weight particle diameter D50) with the disc centrifuge DC 24000 by CPS Instruments Inc. equipped with a low density disc, an aqueous sugar solution of 17.1 mL with a density gradient of 8 to 20% by wt. of saccharose in the centrifuge disc was used, in order to achieve a stable flotation behavior of the particles. A polybutadiene latex with a narrow distribution and a mean particle size of 405 nm was used for calibration. The measurements were carried out at a rotational speed of the disc of 24,000 r.p.m. by injecting 0.1 mL of a diluted rubber dispersion into an aqueous 24% by wt. saccharose solution.

The calculation of the weight average particle size Dw was performed by means of the formula

$$D_w = \text{sum} ( n_i * d_i^4 ) / \text{sum}( n_i * d_i^3 )$$

$n_i$: number of particles of diameter $d_i$.

Molar Mass $M_w$

The weight average molar mass $M_w$ is determined by GPC (solvent: tetrahydrofuran, polystyrene as polymer standard) with UV detection according to DIN 55672-1:2016-03.

Odor Test

For the odor evaluations a panel of at least 3 members (all skilled persons) gave ratings of odor intensity and comfortability according to specific standards (SES N 2405, a test method followed by MSIL-Suzuki engineering standards, Japan). The test specimens are exposed to a temperature of 20 to 25°C for 10 to 18 days after manufacture before testing. The test specimen is then heated at 80°C for 3 hours in a closed glass container of 3 litre capacity. An hour after removing the closed glass container to room temperature, the panel members assess the odor intensity and comfortability of the sample by removing the lid of the glass container and sniffing it. Prior to sample test, standard samples like isovaleric acid and Skatole (identified as typical odor causing chemical compounds by automotive OEM) with high odor intensity and uncomfortability are assessed by the panel members.

Table 1: Rating Scale of Odor sensory Evaluation

| Odor Intensity | | Hedonic Scale of Odor (Comfortability) | |
|---|---|---|---|
| 5 | overpowering odor | 3 | very pleasant |
| 4 | strong odor | 2 | pleasant |
| 3 | easily smellable odor | 1 | some what pleasant |
| 2 | distinguishable mild odor | 0 | not either |
| 1 | faint odor | -1 | some what unpleasant |
| 0 | odorless | -2 | unpleasant |
| | | -3 | very unpleasant |
| Odor Intensity: 5 --- Unbearable odor that stops breathe instinctively. Accompanied by nausea, headache, and dizziness<br>Odor Intensity: 4 --- The odor that wants to turn a nose away | | | |

Table 2: Chemical compound necessary to make standard odor

| Chemical Compound | CAS No. | Making method of Standard odor |
|---|---|---|
| $\beta$-phenyl ethyl alcohol | 60-12-8 | Concentration of Standard odor $10^{-4.0}$ |
| Methyl cyclopentenolene | 80-71-7 | Concentration of Standard odor $10^{-4.5}$ |
| Isovaleric acid | 503-74-2 | Concentration of Standard odor $10^{-5.0}$ |
| $\gamma$-Undecalacton | 104-67-6 | Concentration of Standard odor $10^{-4.5}$ |
| Skatole | 83-34-1 | Concentration of Standard odor $10^{-5.0}$ |
| odorless paraffin | 8042-47-5 | Reference liquid |

Tensile Strength (TS) and Tensile Modulus (TM) Test

Tensile test (ASTM D 638) of ABS blends was carried out at 23°C using a Universal testing Machine (UTM) of Lloyd Instruments, UK.

Flexural Strength (FS) and Flexural Modulus (FM) Test

Flexural test of ABS blends (ASTM D 790 standard) was carried out at 23°C using a UTM of Lloyd Instruments, UK.

Notched Izod Impact Strength (NIIS) Test

Izod impact tests were performed on notched specimens (ASTM D 256 standard) using an instrument of CEAST (part of Instron's product line), Italy.

VICAT Softening Temperature (VST)

Vicat softening temperature test was performed on injection molded test specimen (ASTM D 1525-09 standard) using a CEAST, Italy machine. Test is carried out at a heating rate of 120°C/hr (Method B) at 50 N loads.

Melt Flow Index (MFI) or Melt Flow Rate (MFR)

MFI/MFR test was performed on ABS pellets (ISO 1133 standard, ASTM 1238, 220°C/10 kg load) using a MFI-machine of CEAST, Italy.

Materials used:

Remark:

$$1 \text{ centi Stoke} = 1 \text{ mm}^2/\text{s}$$

Component (A)

Fine-particle butadiene rubber latex (S-A1)

The fine-particle butadiene rubber latex (S-A1) which is used for the agglomeration step was produced by emulsion polymerization using tert-dodecylmercaptan as chain transfer agent and potassium persulfate as initiator at temperatures from 60° to 80°C. The addition of potassium persulfate marked the beginning of the polymerization.
Finally the fine-particle butadiene rubber latex (S-A1) was cooled below 50°C and the non reacted monomers were removed partially under vacuum (200 to 500 mbar) at temperatures below 50°C which defines the end of the polymerization.
Then the latex solids (in % per weight) were determined by evaporation of a sample at 180°C for 25 min. in a drying cabinet. The monomer conversion is calculated from the measured latex solids. The butadiene rubber latex (S-A1) is characterized by the following parameters, see table 1.

Latex S-A1-1

No seed latex is used. As emulsifier the potassium salt of a disproportionated rosin (amount of potassium dehydroabietate: 52 wt.-%, potassium abietate: 0 wt.-%) and as salt tetrasodium pyrophosphate is used.

Table 1: Composition of the butadiene rubber latex S-A1

| Latex | S-A1-1 |
|---|---|
| Monomer butadiene/styrene | 90/10 |
| Seed Latex (wt.-% based on monomers) | ./. |
| Emulsifier (wt.-% based on monomers) | 2.80 |
| Potassium Persulfate (wt.-% based on monomers) | 0.10 |
| Decomposed Potassium Persulfate (parts per 100 parts latex solids) | 0.068 |
| Salt (wt.-% based on monomers) | 0.559 |
| Salt amount relative to the weight of solids of the rubber latex | 0.598 |
| Monomer conversion (%) | 89.3 |

(continued)

| Latex | S-A1-1 |
|---|---|
| Dw (nm) | 87 |
| pH | 10.6 |
| Latex solids content (wt.-%) | 42.6 |
| K | 0.91 |

$$K = W * ( 1 - 1.4 * S ) * Dw$$

W = decomposed potassium persulfate [parts per 100 parts rubber]
S = salt amount in percent relative to the weight of solids of the rubber latex
Dw = weight average particle size (= median particle diameter $D_{50}$) of the fine-particle butadiene rubber latex (S-A1)

Production of the coarse-particle, agglomerated butadiene rubber latices (A1)

The production of the coarse-particle, agglomerated butadiene rubber latices (A1) was performed with the specified amounts mentioned in table 2. The fine-particle butadiene rubber latex (S-A1) was provided first at 25°C and was adjusted if necessary with deionized water to a certain concentration and stirred. To this dispersion an amount of acetic anhydride based on 100 parts of the solids from the fine-particle butadiene rubber latex (S-A1) as fresh produced aqueous mixture with a concentration of 4.58 wt.-% was added and the total mixture was stirred for 60 seconds. After this the agglomeration was carried out for 30 minutes without stirring. Subsequently KOH was added as a 3 to 5 wt.-% aqueous solution to the agglomerated latex and mixed by stirring. After filtration through a 50 μm filter the amount of coagulate as solid mass based on 100 parts solids of the fine-particle butadiene rubber latex (S-A1) was determined. The solid content of the agglomerated butadiene rubber latex (A), the pH value und the median weight particle diameter $D_{50}$ was determined.

Table 2: Production of the coarse-particle, agglomerated butadiene rubber latices (A1)

| latex A1 | | A1-1 | A1-2 |
|---|---|---|---|
| used latex S-A1 | | S-A1-1 | S-A1-1 |
| concentration latex S-A1 before agglomeration | wt.-% | 37.4 | 37.4 |
| amount acetic anhydride | parts | 0.90 | 0.91 |
| amount KOH | parts | 0.81 | 0.82 |
| concentration KOH solution | wt.-% | 3 | 3 |
| solid content latex A1 | wt.-% | 32.5 | 32.5 |
| coagulate | parts | 0.01 | 0.00 |
| pH | | 9.0 | 9.0 |
| $D_{50}$ | nm | 315 | 328 |

Production of the graft copolymers (A)

59.5 wt.-parts of mixtures of the coarse-particle, agglomerated butadiene rubber latices A1-1 and A1-2 (ratio 50 : 50, calculated as solids of the rubber latices (A1)) were diluted with water to a solid content of 27.5 wt.-% and heated to 55°C. 40.5 wt.-parts of a mixture consisting of 72 wt.-parts styrene, 28 wt.-parts acrylonitrile and 0.4 wt.-parts tert-dodecylmercaptan were added in 3 hours 30 minutes.
At the same time when the monomer feed started the polymerization was started by feeding 0.15 wt.-parts cumene hydroperoxide together with 0.57 wt.-parts of a potassium salt of disproportionated rosin (amount of potassium dehydroabietate: 52 wt.-%, potassium abietate: 0 wt.-%) as aqueous solution and separately an aqueous solution of 0.22 wt.-parts of glucose, 0.36 wt.-% of tetrasodium pyrophosphate and 0.005 wt.-% of iron-(II)-sulfate within 3 hours 30 minutes.

The temperature was increased from 55 to 75°C within 3 hours 30 minutes after start feeding the monomers. The polymerization was carried out for further 2 hours at 75°C and then the graft rubber latex (= graft copolymer A) was cooled to ambient temperature. The graft rubber latex was stabilized with ca. 0.6 wt.-parts of a phenolic antioxidant and precipitated with sulfuric acid, washed with water and the wet graft powder was dried at 70°C (residual humidity less than 0.5 wt.-%).

The obtained product is graft copolymer (A-I).

Component (B)

B-1: Statistical copolymer from styrene and acrylonitrile with a ratio of polymerized styrene to acrylonitrile of 70:30 with a weight average molecular weight Mw of 125,000 g/mol, a polydispersity of Mw/Mn of 2.3 and a melt flow rate (MFR) (220°C/10 kg load) of 30 mL/10 minutes, produced by free radical solution polymerization.

B-2: Statistical copolymer from styrene and acrylonitrile with a ratio of polymerized styrene to acrylonitrile of 72:28 with a weight average molecular weight Mw of 185,000 g/mol, a polydispersity of Mw/Mn of 2.5 and a melt flow rate (MFR) (220°C/10 kg load) of 6 to 7 mL/10 minutes, produced by free radical solution polymerization.

Further Components

C1: ethylene bis-stearamide from Palmamide Sdn Bhd, Malaysia
C2/F-1: magnesium stearate from Ravi Kiran Chemicals Pvt. ltd
C3/E1: magnesium oxide from Kyowa Chemical Industry co. ltd
C4-1/E2: distearylpentaerythrityldiphosphite (SPEP) from Addivant, Switzerland
C4-2: Irgafos® 168 from BASF-CIBA
C4-3: Irganox 1076 from BASF
C5-1: silicon oil having a kinematic viscosity of 30000 centi Stokes from KK Chempro India Pvt ltd
C5-2/E3-1: silicon oil having a kinematic viscosity of 60000 centi Stokes from KK Chempro India Pvt ltd
C5-3/E3-2: silicon oil having a kinematic viscosity of 1000 centi Stokes from Ark Chemicals Pvt ltd
D-1: Uvinul 4050, an UV absorbing additive, from BASF
D-2: Uvinul 3035, an UV absorbing additive, from BASF
D-3: Carbon Black Master Batch SA3176 from Cabot Switzerland GmbH
D-4: $TiO_2$ from the Chemours Company
E4: pentaerythritol tetrastearate (PETS) from Fine Organics

Thermoplastic compositions

Graft rubber polymer (A-I), SAN-copolymer (B-I) or (B-2), and the afore-mentioned further components were mixed (composition of polymer blend see Tables 3A to 3C, batch size 5 kg) for 2 minutes in a high speed mixer to obtain good dispersion and a uniform premix and then said premix was melt blended in a twin-screw extruder at a speed of 80 rpm and using an incremental temperature profile from 190 to 220° C for the different barrel zones. The extruded strands were cooled in a water bath, air-dried and pelletized.

For the odor and mechanical tests specimens of the obtained blend were injection moulded at a temperature of 190 to 230°C. The test specimens (plaques 105x150x2 mm) for the odor tests were packed into aluminium foil. Standard test specimens (ASTM test bars) of the obtained blend were used for the mechanical testing.

Table 3A: composition of polymer blend

| Components (wt.-%) | Comparative Example 1 | Example 1A |
|---|---|---|
| A-I | 26.9 | 27.1 |
| B-1 | 69.2 | 69.8 |
| C1 | 1.9 | 1.0 |
| C2 | 0.3 | 0.3 |
| C3 | 0.1 | 0.1 |
| C4-1 | 0.14 | 0.14 |

(continued)

| Components (wt.-%) | Comparative Example 1 | Example 1A |
|---|---|---|
| C5-3 | 0.14 | - |
| C5-1 | - | 0.14 |
| D-3 | 1.44 | 1.46 |

Table 3B: composition of polymer blend

| Components (wt.-%) | Comparative Example 2 | Example 2A | Example 2B |
|---|---|---|---|
| A-I | 24.8 | 25.0 | 25.1 |
| B-1 | 71.0 | 71.2 | 71.4 |
| C1 | 1.5 | 1.0 | 1.0 |
| C2 | 0.3 | 0.3 | - |
| C3 | 0.1 | 0.10 | 0.10 |
| C4-1 | 0.4 | 0.4 | 0.4 |
| C4-2 | 0.2 | 0.2 | 0.2 |
| C5-3 | 0.14 | ---- | ---- |
| C5-2 | ---- | 0.14 | 0.14 |
| D-1 | 0.5 | 0.5 | 0.5 |
| D-2 | 0.35 | 0.35 | 0.35 |
| D-4 | 0.87 | 0.87 | 0.87 |

Table 3C: Composition of polymer blend

| Components (wt.-%) | Comparative Example 3 | Example 3A | Example 3B | Example 3C |
|---|---|---|---|---|
| A-I | 19.6 | 19.8 | 19.8 | 21.7 |
| B-2 | 78.4 | 79.1 | 79.1 | 77.1 |
| F-1 | 0.29 | - | - | - |
| E1 | 0.098 | 0.198 | 0.296 | 0.296 |
| E2 | 0.196 | 0.198 | 0.198 | 0.198 |
| E4 | 1.271 | 0.495 | 0.495 | 0.495 |
| E3-2 | 0.147 | - | - | - |
| E3-1 | - | 0.198 | 0.198 | 0.198 |

The odor test results of the compositions are presented in Tables 4A and 4B.

Table 4A

| Odor Rating | Comparative Example 1 | Example 1A | Comparative Example 2 | Example 2A | Example 2B |
|---|---|---|---|---|---|
| Odor Intensity | 3.7 | 2.6 | 3.7 | 2.0 | 2.0 |
| Comfortability | -2.0 | -1.0 | -2.0 | -1.0 | -1.0 |

Table 4B

|  | Comparative Example 3 | Example 3A | Example 3B | Example 3C |
|---|---|---|---|---|
| Odor Intensity | >3.0 | 2.7 | 2.7 | 2.8 |
| Comfortability | < -1.6 | -1.5 | -1.3 | -1.2 |

As shown by Tables 4A and 4B the odor properties of the compositions according to Examples 1A, 2A, 2B, 3A, 3B and 3C are significantly improved compared to prior art samples. It can be shown that the use of silicon oils having a higher viscosity (all Examples) favors a low odor and comfortability. Moreover, it can be seen that compositions (cp. Examples 2B, 3A, 3B and 3C) which do not contain magnesium stearate effect an improved odor. Furthermore, it is shown by Examples 3A, 3B and 3C that in the interest of low or improved odor it is advantageous to use lower amounts of PETS and higher amounts of MgO than in compositions according to the prior art.

The mechanical test results, MFI and the Vicat Softening Temperature (VST) of the compositions are presented in Tables 5A and 5B.

Table 5A

| Properties | Unit | Comparative Example 1 | Example 1A | Comparative Example 2 | Example 2A | Example 2B |
|---|---|---|---|---|---|---|
| Melt Flow Rate | g/10 min | 19.5 | 16.5 | 19.5 | 18.5 | 19.5 |
| NIIS, 6.4 mm | kg.cm/cm | 19.0 | 28.5 | 32.5 | 27 | 19 |
| NIIS, 3.2 mm | kg.cm/cm | 34.0 | 36.9 | 43 | 33.5 | 21.5 |
| Tensile Strength | $kg/cm^2$ | 465 | 480 | 485 | 510 | 510 |
| Tensile Modulus | $kg/cm^2$ | 29900 | 28950 | 28700 | 27550 | 29900 |
| Elongation at Break | % | 31 | 25 | 21 | 19 | 17 |
| Flexural Strength | $kg/cm^2$ | 835 | 850 | 815 | 865 | 875 |
| Flexural Modulus | $kg/cm^2$ | 28000 | 27600 | 27950 | 29350 | 29500 |
| VST | °C | 102 | 102 | 99 | 100.5 | 100 |

Table 5B

| Properties | Unit | Comparative Example 3 | Example 3A | Example 3B | Example 3C |
|---|---|---|---|---|---|
| Melt Flow Rate | g/10 min | 7 | 6.5 | 5.5 | 5.5 |
| NIIS, 6.4 mm | kg.cm/cm | 18 | 16 | 14.5 | 18.5 |
| NIIS, 3.2 mm | kg.cm/cm | 22 | 20.5 | 19.5 | 23.5 |
| Tensile Strength | $kg/cm^2$ | 590 | 565 | 545 | 535 |
| Tensile Modulus | $kg/cm^2$ | 33,300 | 33,000 | 32,900 | 31,850 |
| Elongation at Break | % | 17 | 23 | 27 | 25 |
| Flexural Strength | $kg/cm^2$ | 980 | 950 | 930 | 915 |
| Flexural Modulus | $kg/cm^2$ | 31,650 | 32,850 | 32,500 | 31,400 |
| VST | °C | 104 | 103.5 | 103.5 | 103.5 |

Tables 5A and 5B show that the mechanical properties of the inventive compositions are still good and not much changed.

**Claims**

1. Thermoplastic molding composition comprising components A, B, C1, C2, C3, C4, C5 and D:

(A) 15 to 44.2 wt.-% of at least one graft copolymer (A) consisting of 15 to 60 wt.-% of a graft sheath (A2) and 40 to 85 wt.-% of a graft substrate - an agglomerated butadiene rubber latex - (A1), where (A1) and (A2) sum up to 100 wt.-%, obtained by emulsion polymerization of styrene and acrylonitrile in a weight ratio of 95:5 to 65:35 to obtain a graft sheath (A2), it being possible for styrene and/or acrylonitrile to be replaced partially (less than 50 wt.-%) by alpha-methylstyrene, methyl methacrylate or maleic anhydride or mixtures thereof,

in the presence of at least one agglomerated butadiene rubber latex (A1) with a median weight particle diameter $D_{50}$ of 150 to 800 nm, where the agglomerated rubber latex (A1) is obtained by agglomeration of at least one starting butadiene rubber latex (S-A1) having a median weight particle diameter $D_{50}$ of equal to or less than 120 nm, preferably equal to or less than 110 nm;

(B) 55 to 84.2 wt.-% of at least one copolymer (B) of styrene and acrylonitrile or alpha-methylstyrene and acrylonitrile, preferably styrene and acrylonitrile, in a weight ratio of from 95:5 to 50:50, preferably 78:22 to 55:45, more preferably 75:25 to 65:35, it being possible for styrene, alpha-methylstyrene and/or acrylonitrile to be partially (less than 50 wt.-%) replaced by methyl methacrylate, maleic anhydride and/or 4-phenylstyrene; wherein copolymer (B) has a weight average molar mass $M_w$ of 95,000 to 250,000 g/mol, preferably 100,000 to 225,000 g/mol, more preferably 110,000 to 190,000 g/mol, most preferred 120,000 to 190,000 g/mol; (C1) 0.65 to 1.20 wt.-% of at least one fatty acid amide or fatty acid amide derivative (C1), preferably stearic acid amide or stearic acid amide derivative, in particular ethylene bis-stearamide; (C2) 0 to 0.40 wt.-% of at least one fatty acid metal salt (C2), preferably Ca, Mg or Zn stearate; (C3) 0.05 to 0.30 wt.-% of at least one metal oxide selected from MgO, CaO or ZnO (C3), in particular MgO; (C4) 0.05 to 0.80 wt.-% of at least one antioxidant (C4); (C5) 0.05 to 0.30 wt.-% silicon oil (C5) having a kinematic viscosity in the range of from 25000 to 80000 centi Stokes, preferably 30000 to 60000 centi Stokes; and (D) 0 to 5 wt.-% of at least one further additive/processing aid (D) different from (C1) to (C5), in particular UV absorbing additives, dyes and/or pigments; where components A, B, C1, C3, C4, C5 and, if present, C2 and/or D, sum to 100 wt.-%. wt.-%, wherein the weight average molar mass $M_w$ is determined by GPC in the solvent tetrahydrofuran and polystyrene as polymer standard with UV detection according to DIN 55672-1:2016-03, and wherein the median weight particle diameter $D_{50}$ is measured according to the description, and wherein the kinematic viscosity is measured according to the standard test method ASTM D445-06.

2. Thermoplastic molding composition comprising components A, B, E1, E2, E3, E4 and F:

(A) 15 to 44.1 wt.-% of at least one graft copolymer (A) consisting of 15 to 60 wt.-% of a graft sheath (A2) and 40 to 85 wt.-% of a graft substrate - an agglomerated butadiene rubber latex - (A1), where (A1) and (A2) sum up to 100 wt.-%,

obtained by emulsion polymerization of styrene and acrylonitrile in a weight ratio of 95:5 to 65:35 to obtain a graft sheath (A2), it being possible for styrene and/or acrylonitrile to be replaced partially (less than 50 wt.-%) by alpha-methylstyrene, methyl methacrylate or maleic anhydride or mixtures thereof, in the presence of at least one agglomerated butadiene rubber latex (A1) with a median weight particle diameter $D_{50}$ of 150 to 800 nm, where the agglomerated rubber latex (A1) is obtained by agglomeration of at least one starting butadiene rubber latex (S-A1) having a median weight particle diameter $D_{50}$ of equal to or less than 120 nm, preferably equal to or less than 110 nm;

(B) 55 to 84.1 wt.-% of at least one copolymer (B) of styrene and acrylonitrile or alpha-methylstyrene and acrylonitrile, preferably styrene and acrylonitrile, in a weight ratio of from 95:5 to 50:50, preferably 78:22 to 55:45, more preferably 75:25 to 65:35, it being possible for styrene, alpha-methylstyrene and/or acrylonitrile to be partially (less than 50 wt.-%) replaced by methyl methacrylate, maleic anhydride and/or 4-phenylstyrene; wherein copolymer (B) has a weight average molar mass $M_W$ of 95,000 to 250,000 g/mol, preferably 100,000 to 225,000 g/mol, more preferably 110,000 to 190,000 g/mol, most preferred 120,000 to 190,000 g/mol;

(E1) 0.15 to 0.40 wt.-% of at least one metal oxide selected from MgO, CaO or ZnO (E1), in particular magnesium oxide;

(E2) 0.05 to 0.80 wt.-% of at least one antioxidant (E2);

(E3) 0.05 to 0.30 wt.-% silicon oil (E3) having a kinematic viscosity in the range of from 30000 to 80000 centi Stokes;

(E4) 0.65 to 1.20 wt.-% of at least one fatty acid ester (E4), preferably a stearic acid ester or behenic acid ester, in particular pentaerythritol tetrastearate (PETS);

(F) 0 to 5 wt.-% of at least one further additive/processing aid (F) different from (E1) to (E4), in particular UV light absorbing additives, dyes and/or pigments, provided that fatty acid metal salts, in particular Ca, Mg or Zn stearates, are excluded;

where components A, B, E1, E2, E3, E4 and, if present, F, sum to 100 wt.-%,

wherein the weight average molar mass Mw is determined by GPC in the solvent tetrahydrofuran and polystyrene as polymer standard with UV detection according to DIN 55672-1:2016-03,

and wherein the median weight particle diameter D50 is measured according to the description,

and wherein the kinematic viscosity is measured according to the standard test method ASTM D445-06.

3. Thermoplastic molding composition according to claim 1 or 2, wherein graft copolymer (A) is obtained by emulsion polymerization by use of a rosin acid-based emulsifier.

4. Thermoplastic molding composition according to claim 1 or 3 wherein copolymer (B) is a copolymer (B-1), preferably a copolymer of styrene and acrylonitrile in a weight ratio of from 78:22 to 65:35, preferably 75:25 to 68:32, having a weight average molar mass $M_W$ of 110,000 to 150,000 g/mol, most preferred 115,000 to 140,000 g/mol.

5. Thermoplastic molding composition according to claim 2 or 3 wherein copolymer (B) is a copolymer (B-2), preferably a copolymer of styrene and acrylonitrile in a weight ratio of from 78:22 to 65:35, preferably 75:25 to 68:32, having a weight average molar mass $M_W$ of 150,000 to 225,000 g/mol, preferably 160,000 to 200,000 g/mol.

6. Thermoplastic molding composition according to any of claims 1 to 4 wherein component (C5) or (E3) is a silicon oil having a kinematic viscosity in the range of from 45000 to 70000 centi Stokes, more preferably 55000 to 65000 centi Stokes.

7. Thermoplastic molding composition according to any of claims 1, 3, 4 and 6 comprising components:

18 to 33.97 wt.-% component (A);
65 to 80.97 wt.-% component (B);
0.70 to 1.20 wt.-% component (C1);
0 to 0.35 wt.-% component (C2);
0.08 to 0.20 wt.-% component (C3);
0.15 to 0.70 wt.-% component (C4);
0.10 to 0.25 wt.-% component (C5);
0 to 3 wt.-% component (D).

8. Thermoplastic molding composition according to any of claims 1, 3, 4 and 6 comprising components:

21 to 28.2 wt.-% component (A);
70 to 77.2 wt.-% component (B);
0.90 to 1.10 wt.-% component (C1);
0 to 0.30 wt.-% component (C2);
0.08 to 1.50 wt.-% component (C3);
0.20 to 0.60 wt.-% component (C4);
0.12 to 0.20 wt.-% component (C5);
0.50 to 3 wt.-% component (D).

9. Thermoplastic molding composition according to any of claims 2, 3, 5 and 6 comprising components:

17 to 29.9 wt.-% component (A);
69 to 81.9 wt.-% component (B);
0.15 to 0.35 wt.-% component (E1);
0.15 to 0.70 wt.-% component (E2);
0.10 to 0.25 wt.-% component (E3);
0.70 to 1.20 wt.-% component (E4);
0 to 3 wt.-% component (F).

10. Thermoplastic molding composition according to any of claims 2, 3, 5 and 6 comprising components:

18 to 23.6 wt.-% component (A);
75 to 80.6 wt.-% component (B);
0.18 to 0.32 wt.-% component (E1);
0.20 to 0.60 wt.-% component (E2);
0.12 to 0.20 wt.-% component (E3);
0.90 to 1.10 wt.-% component (E4);
0 to 3 wt.-% component (F).

11. Thermoplastic molding composition according to any of claims 1, 3, 4 and 6 to 8, wherein (C1) is a stearic acid amide or stearic acid amide derivative, in particular ethylene bis-stearamide.

12. Thermoplastic molding composition according to any of claims 2, 3, 5, 6, 9 and 10, wherein (E4) is a stearic acid ester, in particular pentaerythritol tetrastearate (PETS).

13. Process for the preparation of the thermoplastic molding composition according to any of claims 1 to 12 by melt mixing the components (A), (B), (C1), (C2), (C3), (C4), (C5) and, if present (C2) and/or (D), or the components (A), (B), (E1), (E2), (E3), (E4) and, if present (F), at temperatures in the range of from 160°C to 300°C.

14. Use of thermoplastic molding compositions according to any of claims 1 to 12 for the production of shaped articles.

15. Shaped articles made from the thermoplastic molding composition according to any of claims 1 to 12.

16. Use of the thermoplastic molding compositions according to any of claims 1 to 12 for applications in the automotive sector, in particular for automotive interior applications.


**Patentansprüche**

1. Thermoplastische Formmasse, umfassend die Komponenten A, B, C1, C2, C3, C4, C5 und D:

(A) 15 bis 44,2 Gew.-% mindestens eines Pfropfcopolymers (A), bestehend aus 15 bis 60 Gew.-% einer Pfropfhülle (A2) und 40 bis 85 Gew.-% einer Pfropfgrundlage - eines agglomerierten Butadienkautschuklatex - (A1), wobei die Summe von (A1) und (A2) 100 Gew.-% ergibt, erhalten durch Emulsionspolymerisation von Styrol und Acrylnitril in einem Gewichtsverhältnis von 95:5 bis 65:35 zum Erhalt einer Pfropfhülle (A2), wobei Styrol und/oder Acrylnitril teilweise (zu weniger als 50 Gew.-%) durch alpha-Methylstyrol, Methylmethacrylat oder Maleinsäureanhydrid oder Mischungen davon ersetzt werden können/kann,

in Gegenwart von mindestens einem agglomerierten Butadienkautschuklatex (A1) mit einem gewichtsmittleren Teilchendurchmesser $D_{50}$ von 150 bis 800 nm,
wobei der agglomerierte Kautschuklatex (A1) durch Agglomeration mindestens eines Ausgangs-Butadienkautschuklatex (S-A1) mit einem gewichtsmittleren Teilchendurchmesser $D_{50}$ von gleich oder kleiner als 120 nm, vorzugsweise gleich oder kleiner als 110 nm, erhalten wird;

(B) 55 bis 84,2 Gew.-% mindestens eines Copolymers (B) von Styrol und Acrylnitril oder alpha-Methylstyrol und Acrylnitril, vorzugsweise Styrol und Acrylnitril, in einem Gewichtsverhältnis von 95:5 bis 50:50, vorzugsweise 78:22 bis 55:45, weiter bevorzugt 75:25 bis 65:35, wobei das Styrol, alpha-Methylstyrol und/oder Acrylnitril teilweise (zu weniger als 50 Gew.-%) durch Methylmethacrylat, Maleinsäureanhydrid und/oder 4-Phenylstyrol ersetzt werden können/kann;

wobei Copolymer (B) eine gewichtsmittlere Molmasse $M_w$ von 95.000 bis 250.000 g/mol, vorzugsweise 100.000 bis 225.000 g/mol, weiter bevorzugt 110.000 bis 190.000 g/mol, ganz besonders bevorzugt 120.000 bis 190.000 g/mol, aufweist;

(C1) 0,65 bis 1,20 Gew.-% mindestens eines Fettsäureamids oder Fettsäureamid-Derivats (C1), vorzugsweise Stearinsäureamids oder Stearinsäureamid-Derivats, insbesondere Ethylenbisstearamid;

(C2) 0 bis 0,40 Gew.-% mindestens eines Fettsäuremetallsalzes (C2), vorzugsweise Ca-, Mg- oder Zn-Stearat;

(C3) 0,05 bis 0,30 Gew.-% mindestens eines Metalloxids, das aus MgO, CaO oder ZnO ausgewählt ist (C3), insbesondere MgO;

(C4) 0,05 bis 0,80 Gew.-% mindestens eines Antioxidans (C4);

(C5) 0,05 bis 0,30 Gew.-% Silikonöl (C5) mit einer kinematischen Viskosität im Bereich von 25.000 bis 80.000 Centistokes, vorzugsweise 30.000 bis 60.000 Centistokes; und

(D) 0 bis 5 Gew.-% mindestens eines weiteren Additivs/einer weiteren Verarbeitungshilfe (D), das bzw. die von (C1) bis (C5) verschieden ist, insbesondere UV-absorbierende Additive, Farbstoffe und/oder Pigmente;

wobei die Summe der Komponenten A, B, C1, C3, C4, C5 und, sofern vorhanden, C2 und/oder D 100 Gew.-% ergibt,

wobei die gewichtsmittlere Molmasse $M_w$ mittels GPC im Lösungsmittel Tetrahydrofuran und mit Polystyrol als Polymerstandard mit UV-Detektion gemäß DIN 55672-1:2016-03 bestimmt wird

und wobei der gewichtsmittlere Teilchendurchmesser $D_{50}$ gemäß der Beschreibung gemessen wird und wobei die kinematische Viskosität gemäß der Normprüfmethode ASTM D445-06 gemessen wird.

2. Thermoplastische Formmasse, umfassend die Komponenten A, B, E1, E2, E3, E4 und F:

(A) 15 bis 44,1 Gew.-% mindestens eines Pfropfcopolymers (A), bestehend aus 15 bis 60 Gew.-% einer Pfropfhülle (A2) und 40 bis 85 Gew.-% einer Pfropfgrundlage - eines agglomerierten Butadienkautschuklatex - (A1), wobei die Summe von (A1) und (A2) 100 Gew.-% ergibt,

erhalten durch Emulsionspolymerisation von Styrol und Acrylnitril in einem Gewichtsverhältnis von 95:5 bis 65:35 zum Erhalt einer Pfropfhülle (A2), wobei Styrol und/oder Acrylnitril teilweise (zu weniger als 50 Gew.-%) durch alpha-Methylstyrol, Methylmethacrylat oder Maleinsäureanhydrid oder Mischungen davon ersetzt werden können/kann,

in Gegenwart von mindestens einem agglomerierten Butadienkautschuklatex (A1) mit einem gewichtsmittleren Teilchendurchmesser $D_{50}$ von 150 bis 800 nm,

wobei der agglomerierte Kautschuklatex (A1) durch Agglomeration mindestens eines Ausgangs-Butadienkautschuklatex (S-A1) mit einem gewichtsmittleren Teilchendurchmesser $D_{50}$ von gleich oder kleiner als 120 nm, vorzugsweise gleich oder kleiner als 110 nm, erhalten wird;

(B) 55 bis 84,1 Gew.-% mindestens eines Copolymers (B) von Styrol und Acrylnitril oder alpha-Methylstyrol und Acrylnitril, vorzugsweise Styrol und Acrylnitril, in einem Gewichtsverhältnis von 95:5 bis 50:50, vorzugsweise 78:22 bis 55:45, weiter bevorzugt 75:25 bis 65:35, wobei das Styrol, alpha-Methylstyrol und/oder Acrylnitril teilweise (zu weniger als 50 Gew.-%) durch Methylmethacrylat, Maleinsäureanhydrid und/oder 4-Phenylstyrol ersetzt werden können/kann;

wobei Copolymer (B) eine gewichtsmittlere Molmasse $M_w$ von 95.000 bis 250.000 g/mol, vorzugsweise 100.000 bis 225.000 g/mol, weiter bevorzugt 110.000 bis 190.000 g/mol, ganz besonders bevorzugt 120.000 bis 190.000 g/mol, aufweist;

(E1) 0,15 bis 0,40 Gew.-% mindestens eines Metalloxids, das aus MgO, CaO oder ZnO ausgewählt ist (E1), insbesondere Magnesiumoxid;

(E2) 0,05 bis 0,80 Gew.-% mindestens eines Antioxidans (E2);

(E3) 0,05 bis 0,30 Gew.-% Silikonöl (E3) mit einer kinematischen Viskosität im Bereich von 30.000 bis 80.000 Centistokes;

(E4) 0,65 bis 1,20 Gew.-% mindestens eines Fettsäureesters (E4), vorzugsweise eines Stearinsäureesters oder Behensäureesters, insbesondere Pentaerythritoltetrastearat (PETS);

(F) 0 bis 5 Gew.-% mindestens eines weiteren Additivs/einer weiteren Verarbeitungshilfe (F), das bzw. die von (E1) bis (E4) verschieden ist, insbesondere UV-Licht absorbierende Additive, Farbstoffe und/oder Pigmente, mit der Maßgabe, dass Fettsäuremetallsalze, insbesondere Ca-, Mg- oder Zn-Stearate, ausgeschlossen sind;

wobei die Summe der Komponenten A, B, E1, E2, E3 und E4 und, sofern vorhanden, F 100 Gew.-% ergibt, wobei die gewichtsmittlere Molmasse $M_w$ mittels GPC im Lösungsmittel Tetrahydrofuran und mit Polystyrol als Polymerstandard mit UV-Detektion gemäß DIN 55672-1:2016-03 bestimmt wird

und wobei der gewichtsmittlere Teilchendurchmesser $D_{50}$ gemäß der Beschreibung gemessen wird und wobei die kinematische Viskosität gemäß der Normprüfmethode ASTM D445-06 gemessen wird.

3.  Thermoplastische Formmasse nach Anspruch 1 oder 2, wobei das Pfropfcopolymer (A) durch Emulsionspolymerisation durch Verwendung eines auf Harzsäure basierenden Emulgators erhalten wird.

4.  Thermoplastische Formmasse nach Anspruch 1 oder 3, wobei es sich bei dem Copolymer (B) um ein Copolymer (B-1), vorzugsweise ein Copolymer von Styrol und Acrylnitril in einem Gewichtsverhältnis von 78:22 bis 65:35, vorzugsweise 75:25 bis 68:32, mit einer gewichtsmittleren Molmasse $M_W$ von 110.000 bis 150.000 g/mol, ganz besonders bevorzugt 115.000 bis 140.000 g/mol, handelt.

5.  Thermoplastische Formmasse nach Anspruch 2 oder 3, wobei es sich bei dem Copolymer (B) um ein Copolymer (B-2), vorzugsweise ein Copolymer von Styrol und Acrylnitril in einem Gewichtsverhältnis von 78:22 bis 65:35, vorzugsweise 75:25 bis 68:32, mit einer gewichtsmittleren Molmasse $M_W$ von 150.000 bis 225.000 g/mol, vorzugsweise 160.000 bis 200.000 g/mol, handelt.

6.  Thermoplastische Formmasse nach einem der Ansprüche 1 bis 4, wobei es sich bei Komponente (C5) bzw. (E3) um ein Silikonöl mit einer kinematischen Viskosität im Bereich von 45.000 bis 70.000 Centistokes, weiter bevorzugt 55.000 bis 65.000 Centistokes, handelt.

7.  Thermoplastische Formmasse nach einem der Ansprüche 1, 3, 4 und 6, die folgende Komponenten umfasst:

    18 bis 33,97 Gew.-% Komponente (A);
    65 bis 80,97 Gew.-% Komponente (B);
    0,70 bis 1,20 Gew.-% Komponente (C1);
    0 bis 0,35 Gew.-% Komponente (C2);
    0,08 bis 0,20 Gew.-% Komponente (C3);
    0,15 bis 0,70 Gew.-% Komponente (C4);
    0,10 bis 0,25 Gew.-% Komponente (C5);
    0 bis 3 Gew.-% Komponente (D).

8.  Thermoplastische Formmasse nach einem der Ansprüche 1, 3, 4 und 6, die folgende Komponenten umfasst:

    21 bis 28,2 Gew.-% Komponente (A);
    70 bis 77,2 Gew.-% Komponente (B);
    0,90 bis 1,10 Gew.-% Komponente (C1);
    0 bis 0,30 Gew.-% Komponente (C2);
    0,08 bis 1,50 Gew.-% Komponente (C3);
    0,20 bis 0,60 Gew.-% Komponente (C4);
    0,12 bis 0,20 Gew.-% Komponente (C5);
    0,50 bis 3 Gew.-% Komponente (D).

9.  Thermoplastische Formmasse nach einem der Ansprüche 2, 3, 5 und 6, die folgende Komponenten umfasst:

    17 bis 29,9 Gew.-% Komponente (A);
    69 bis 81,9 Gew.-% Komponente (B);
    0,15 bis 0,35 Gew.-% Komponente (E1);
    0,15 bis 0,70 Gew.-% Komponente (E2);
    0,10 bis 0,25 Gew.-% Komponente (E3);
    0,70 bis 1,20 Gew.-% Komponente (E4);
    0 bis 3 Gew.-% Komponente (F).

10. Thermoplastische Formmasse nach einem der Ansprüche 2, 3, 5 und 6, die folgende Komponenten umfasst:

    18 bis 23,6 Gew.-% Komponente (A);
    75 bis 80,6 Gew.-% Komponente (B);
    0,18 bis 0,32 Gew.-% Komponente (E1);
    0,20 bis 0,60 Gew.-% Komponente (E2);
    0,12 bis 0,20 Gew.-% Komponente (E3);

0,90 bis 1,10 Gew.-% Komponente (E4);
0 bis 3 Gew.-% Komponente (F).

11. Thermoplastische Formmasse nach einem der Ansprüche 1, 3, 4 und 6 bis 8, wobei es sich bei (C1) um ein Stearinsäureamid oder Stearinsäureamid-Derivat, insbesondere Ethylenbisstearamid, handelt.

12. Thermoplastische Formmasse nach einem der Ansprüche 2, 3, 5, 6, 9 und 10, wobei es sich bei (E4) um einen Stearinsäureester, insbesondere Pentaerythrittetrastearat (PETS), handelt.

13. Verfahren zur Herstellung der thermoplastischen Formmasse nach einem der Ansprüche 1 bis 12 durch Schmelzemischen der Komponenten (A), (B), (C1), (C2), (C3), (C4), (C5) und, sofern vorhanden, (C2) und/oder (D) bzw. der Komponenten (A), (B), (E1), (E2), (E3), (E4) und, sofern vorhanden, (F), bei Temperaturen im Bereich von 160 °C bis 300 °C.

14. Verwendung von thermoplastischen Formmassen nach einem der Ansprüche 1 bis 12 zur Herstellung von Formkörpern.

15. Formkörper aus der thermoplastischen Formmasse nach einem der Ansprüche 1 bis 12.

16. Verwendung der thermoplastischen Formmassen nach einem der Ansprüche 1 bis 12 für Anwendungen im Automobilsektor, insbesondere für Automobil-Innenanwendungen.

**Revendications**

1. Composition de moulage thermoplastique comprenant des composants A, B, C1, C2, C3, C4, C5 et D :

(A) 15 à 44,2 % en poids d'au moins un copolymère greffé (A) constitué de 15 à 60 % en poids d'un gaine de greffe (A2) et 40 à 85 % en poids d'un substrat de greffe (un latex de caoutchouc butadiène aggloméré) (A1), où la somme de (A1) et (A2) est de jusqu'à 100 % en poids, obtenu par polymérisation en émulsion de styrène et d'acrylonitrile dans un rapport en poids de 95:5 à 65:35 pour obtenir une gaine de greffe (A2), le styrène et/ou l'acrylonitrile pouvant être remplacés partiellement (moins de 50 % en poids) par l'alpha-méthylstyrène, le méthacrylate de méthyle ou l'anhydride maléique ou des mélanges de ceux-ci,

en présence d'au moins un latex de caoutchouc butadiène aggloméré (A1) ayant un diamètre de particule médian en poids $D_{50}$ de 150 à 800 nm, où le latex de caoutchouc aggloméré (A1) est obtenu par agglomération d'au moins un latex de caoutchouc butadiène de départ (S-A1) ayant un diamètre de particule médian en poids $D_{50}$ inférieur ou égal à 120 nm, de préférence inférieur ou égal à 110 nm ;

(B) 55 à 84,2 % en poids d'au moins un copolymère (B) de styrène et d'acrylonitrile ou d'alpha-méthylstyrène et d'acrylonitrile, de préférence de styrène et d'acrylonitrile, dans un rapport en poids de 95:5 à 50:50, de préférence 78:22 à 55:45, plus préférablement 75:25 à 65:35, le styrène, l'alpha-méthylstyrène et/ou l'acrylonitrile pouvant être partiellement (moins de 50 % en poids) remplacés par le méthacrylate de méthyle, l'anhydride maléique et/ou le 4-phénylstyrène ;
dans laquelle le copolymère (B) a une masse moléculaire moyenne en poids $M_w$ de 95 000 à 250 000 g/mol, de préférence 100 000 à 225 000 g/mol, plus préférablement 110 000 à 190 000 g/mol, de manière préférée entre toutes 120 000 à 190 000 g/mol ;
(C1) 0,65 à 1,20 % en poids d'au moins un amide d'acide gras ou dérivé d'amide d'acide gras (C1), de préférence l'amide d'acide stéarique ou un dérivé d'amide d'acide stéarique, en particulier l'éthylène-bis-stéaramide ;
(C2) 0 à 0,40 % en poids d'au moins un sel métallique d'acide gras (C2), de préférence le stéarate de Ca, Mg ou Zn ;
(C3) 0,05 à 0,30 % en poids d'au moins un oxyde métallique choisi parmi MgO, CaO ou ZnO (C3), en particulier MgO ; (C4) 0,05 à 0,80 % en poids d'au moins un antioxydant (C4) ;
(C5) 0,05 à 0,30 % en poids d'huile silicone (C5) ayant une viscosité cinématique dans la plage de 25 000 à 80 000 centistokes, de préférence 30 000 à 60 000 centistokes ; et
(D) 0 à 5 % en poids d'au moins un additif/adjuvant de traitement supplémentaire (D) différent de (C1) à (C5), en particulier des additifs absorbant les UV, des colorants et/ou des pigments ; où la somme des composants A, B, C1, C3, C4, C5 et, le cas échéant, C2 et/ou D, est de 100 % en poids,
la masse moléculaire moyenne en poids $M_w$ étant déterminée par GPC dans le solvant tétrahydrofurane et avec le polystyrène en tant que polymère de référence avec détection UV selon DIN 55672-1:2016-03,
et le diamètre de particule médian en poids $D_{50}$ étant mesuré selon la description,
et la viscosité cinématique étant mesurée selon la méthode d'essai standard ASTM D445-06.

2. Composition de moulage thermoplastique comprenant des composants A, B, E1, E2, E3, E4 et F :

(A) 15 à 44,1 % en poids d'au moins un copolymère greffé (A) constitué de 15 à 60 % en poids d'un gaine de greffe (A2) et 40 à 85 % en poids d'un substrat de greffe (un latex de caoutchouc butadiène aggloméré) (A1), où la somme de (A1) et (A2) est de jusqu'à 100 % en poids, obtenu par polymérisation en émulsion de styrène et d'acrylonitrile dans un rapport en poids de 95:5 à 65:35 pour obtenir une gaine de greffe (A2), le styrène et/ou l'acrylonitrile pouvant être remplacés partiellement (moins de 50 % en poids) par l'alpha-méthylstyrène, le méthacrylate de méthyle ou l'anhydride maléique ou des mélanges de ceux-ci,

en présence d'au moins un latex de caoutchouc butadiène aggloméré (A1) ayant un diamètre de particule médian en poids $D_{50}$ de 150 à 800 nm,
où le latex de caoutchouc aggloméré (A1) est obtenu par agglomération d'au moins un latex de caoutchouc butadiène de départ (S-A1) ayant un diamètre de particule médian en poids $D_{50}$ inférieur ou égal à 120 nm, de préférence inférieur ou égal à 110 nm ;

(B) 55 à 84,1 % en poids d'au moins un copolymère (B) de styrène et d'acrylonitrile ou d'alpha-méthylstyrène et d'acrylonitrile, de préférence de styrène et d'acrylonitrile, dans un rapport en poids de 95:5 à 50:50, de préférence 78:22 à 55:45, plus préférablement 75:25 à 65:35, le styrène, l'alpha-méthylstyrène et/ou l'acrylonitrile pouvant être partiellement (moins de 50 % en poids) remplacé par le méthacrylate de méthyle, l'anhydride maléique et/ou le 4-phénylstyrène ;
dans laquelle le copolymère (B) a une masse moléculaire moyenne en poids Mw de 95 000 à 250 000 g/mol, de préférence 100 000 à 225 000 g/mol, plus préférablement 110 000 à 190 000 g/mol, de manière préférée entre toutes 120 000 à 190 000 g/mol ;
(E1) 0,15 à 0,40 % en poids d'au moins un oxyde métallique choisi parmi MgO, CaO ou ZnO (E1), en particulier l'oxyde de magnésium ;
(E2) 0,05 à 0,80 % en poids d'au moins un antioxydant (E2) ;
(E3) 0,05 à 0,30 % en poids d'huile silicone (E3) ayant une viscosité cinématique dans la plage de 30 000 à 80 000 centistokes ;
(E4) 0,65 à 1,20 % en poids d'au moins un ester d'acide gras (E4), de préférence un ester d'acide stéarique ou un ester d'acide béhénique, en particulier le tétrastéarate de pentaérythritol (PETS) ;
(F) 0 à 5 % en poids d'au moins un additif/adjuvant de traitement supplémentaire (F) différent de (E1) à (E4), en particulier des additifs absorbant la lumière UV, des colorants et/ou des pigments, à condition que des sels métalliques d'acide gras, en particulier des stéarates de Ca, Mg ou Zn, soient exclus ;
où la somme des composants A, B, E1, E2, E3, E4 et, le cas échéant, F, est de 100 % en poids,
la masse moléculaire moyenne en poids $M_w$ étant déterminée par GPC dans le solvant tétrahydrofurane et avec le polystyrène en tant que polymère de référence avec détection UV selon DIN 55672-1:2016-03,
et le diamètre de particule médian en poids D50 étant mesuré selon la description,
et la viscosité cinématique étant mesurée selon la méthode d'essai standard ASTM D445-06.

3. Composition de moulage thermoplastique selon la revendication 1 ou 2, dans laquelle le copolymère greffé (A) est obtenu par polymérisation en émulsion au moyen d'un émulsifiant à base d'acide de colophane.

4. Composition de moulage thermoplastique selon la revendication 1 ou 3 dans laquelle le copolymère (B) est un copolymère (B-1), de préférence un copolymère de styrène et d'acrylonitrile dans un rapport en poids de 78:22 à 65:35, de préférence 75:25 à 68:32, ayant une masse moléculaire moyenne en poids $M_w$ de 110 000 à 150 000 g/mol, de manière préférée entre toutes de 115 000 à 140 000 g/mol.

5. Composition de moulage thermoplastique selon la revendication 2 ou 3 dans laquelle le copolymère (B) est un copolymère (B-2), de préférence un copolymère de styrène et d'acrylonitrile dans un rapport en poids de 78:22 à 65:35, de préférence 75:25 à 68:32, ayant une masse moléculaire moyenne en poids $M_w$ de 150 000 à 225 000 g/mol, de préférence 160 000 à 200 000 g/mol.

**6.** Composition de moulage thermoplastique selon l'une quelconque des revendications 1 à 4 dans laquelle le composant (C5) ou (E3) est une huile silicone ayant une viscosité cinématique dans la plage de 45 000 à 70 000 centistokes, plus préférablement de 55 000 à 65 000 centistokes.

**7.** Composition de moulage thermoplastique selon l'une quelconque des revendications 1, 3, 4 et 6 comprenant les composants suivants :

18 à 33,97 % en poids de composant (A) ;
65 à 80,97 % en poids de composant (B) ;
0,70 à 1,20 % en poids de composant (C1) ;
0 à 0,35 % en poids de composant (C2) ;
0,08 à 0,20 % en poids de composant (C3) ;
0,15 à 0,70 % en poids de composant (C4) ;
0,10 à 0,25 % en poids de composant (C5) ;
0 à 3 % en poids de composant (D).

**8.** Composition de moulage thermoplastique selon l'une quelconque des revendications 1, 3, 4 et 6 comprenant les composants suivants :

21 à 28,2 % en poids de composant (A) ;
70 à 77,2 % en poids de composant (B) ;
0,90 à 1,10 % en poids de composant (C1) ;
0 à 0,30 % en poids de composant (C2) ;
0,08 à 1,50 % en poids de composant (C3) ;
0,20 à 0,60 % en poids de composant (C4) ;
0,12 à 0,20 % en poids de composant (C5) ;
0,50 à 3 % en poids de composant (D).

**9.** Composition de moulage thermoplastique selon l'une quelconque des revendications 2, 3, 5 et 6 comprenant les composants suivants :

17 à 29,9 % en poids de composant (A) ;
69 à 81,9 % en poids de composant (B) ;
0,15 à 0,35 % en poids de composant (E1) ;
0,15 à 0,70 % en poids de composant (E2) ;
0,10 à 0,25 % en poids de composant (E3) ;
0,70 à 1,20 % en poids de composant (E4) ;
0 à 3 % en poids de composant (F).

**10.** Composition de moulage thermoplastique selon l'une quelconque des revendications 2, 3, 5 et 6 comprenant les composants suivants :

18 à 23,6 % en poids de composant (A) ;
75 à 80,6 % en poids de composant (B) ;
0,18 à 0,32 % en poids de composant (E1) ;
0,20 à 0,60 % en poids de composant (E2) ;
0,12 à 0,20 % en poids de composant (E3) ;
0,90 à 1,10 % en poids de composant (E4) ;
0 à 3 % en poids de composant (F).

**11.** Composition de moulage thermoplastique selon l'une quelconque des revendications 1, 3, 4 et 6 à 8, dans laquelle (C1) est un amide d'acide stéarique ou un dérivé d'amide d'acide stéarique, en particulier l'éthylène-bis-stéaramide.

**12.** Composition de moulage thermoplastique selon l'une quelconque des revendications 2, 3, 5, 6, 9 et 10, dans laquelle (E4) est un ester d'acide stéarique, en particulier le tétrastéarate de pentaérythritol (PETS).

**13.** Procédé de préparation de la composition de moulage thermoplastique selon l'une quelconque des revendications 1 à 12 par mélange à l'état fondu des composants (A), (B), (C1), (C2), (C3), (C4), (C5) et, le cas échéant (C2) et/ou (D), ou les composants (A), (B), (E1), (E2), (E3), (E4) et, le cas échéant (F), à des températures dans la plage de 160 °C à 300 °C.

14. Utilisation d'une composition de moulage thermoplastiques selon l'une quelconque des revendications 1 à 12 pour la production d'articles façonnés.

15. Articles façonnés fabriqués à partir d'une composition de moulage thermoplastique selon l'une quelconque des revendications 1 à 12.

16. Utilisation de la composition de moulage thermoplastiques selon l'une quelconque des revendications 1 à 12 pour des applications dans le secteur automobile, en particulier pour des applications d'intérieur d'automobile.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0849317 A2
- CN 103665733 A
- CN 107236239 A
- CN 107629385 A
- CN 1730543 A
- CN 107446336 A
- WO 2018145970 A1

- WO 2012022710 A
- WO 2014170406 A
- WO 2014170407 A
- WO 2012022710 A1
- DE 2420358 A
- DE 2724360 A
- DE 19907136 A

**Non-patent literature cited in the description**

- Plastics Handbook. **KUNSTSTOFF-HANDBUCH.** Polystyrol [Polystyrene. Carl-Hanser-Verlag, 1969, vol. V, 122

- Plastics Additives Handbook. Hanser Publ, 2001